Europäisches Patentamt

European Patent Office

Office européen des brevets

(11) Numéro de publication: **0 291 418**
**A1**

## (12) DEMANDE DE BREVET EUROPEEN

(21) Numéro de dépôt: **88401172.7**

(51) Int. Cl.⁴: **H 02 G 3/04**

(22) Date de dépôt: **13.05.88**

(30) Priorité: **15.05.87 FR 8706844**

(43) Date de publication de la demande:
**17.11.88 Bulletin 88/46**

(84) Etats contractants désignés:
**AT BE CH DE ES FR GB GR IT LI LU NL SE**

(71) Demandeur: **COMPAGNIE PLASTIC OMNIUM Société Anonyme dite:**
**19, avenue Jules Carteret**
**F-69007 Lyon (FR)**

(72) Inventeur: **De Curraize, Bernard**
**10, rue Barbier d'Aucourt**
**F-52200 Langres (FR)**

**Bartocci, Marcel**
**Balesmes-sur-Marne**
**F-52200 Langres (FR)**

(74) Mandataire: **Leszczynski, André et al**
**CABINET NONY & CIE. 29 rue Cambacérès**
**F-75008 Paris (FR)**

(54) **Tube profilé en matière plastique.**

(57) L'invention est relative à un tube profilé en matière plastique, comportant d'un seul tenant au moins un bourrelet faisant saillie extérieurement de la paroi du tube profilé, le ou chaque bourrelet étant disposé le long d'une génératrice du tube.

Il comporte une paroi (1) à ondulation hélicoïdale, et la paroi du ou de chaque bourrelet (2) est lisse et apté à être sectionnée en sens longitudinal

Fig:3

EP 0 291 418 A1

## Description

### Tube profilé en matière plastique.

La présente invention est relative à un tube profilé en matière plastique, en particulier en matière plastique présentant des propriétés de mémoire plastique à chaud, notamment en résine fluorée telle que le polytétrafluoréthylène (PTFE).

On utilise dans de nombreuses industries, et en particulier dans l'industrie aéronautique des gaines de protection de faisceaux de câbles électriques constituées par un tube flexible convoluté en PTFE présentant une ondulation hélicoïdale de la paroi, ce type de tube offrant une souplesse et une résistance à l'écrasement supérieure à un tube lisse.

De telles gaines tubulaires imposent des servitudes quant à la préparation du câblage qui doit être réalisé manuellement et surtout pour les modifications du faisceau en place dans l'appareillage auquel il est destiné car les câbles doivent être introduits par l'extrémité de la gaine.

Des difficultés sont alors rencontrées pour effectuer une modification du faisceau de câbles, notamment pour l' introduction de câbles supplémentaires ou l'adjonction de dérivations supplémentaires.

La présente invention se propose de réaliser un tube profilé évitant notamment ces inconvénients.

Le tube profilé selon l'invention est du type comportant d'un seul tenant au moins un bourrelet tubulaire faisant saillie extérieurement de la paroi de tube profilé, le où chaque bourrelet étant disposé le long d'une génératrice du tube.

Un tube profilé de ce type, bien qu'ayant une paroi annelée et non à ondulation hélicoïdale est connu par FR-A-02554985.

Dans ce document antérieur (mode de réalisation des figures 10 et 11) il est prévu de réaliser sur un même tube profilé à la fois un bourrelet longitudinal et un évidement longitudinal de forme correspondante en vue de réunir par emboitement des tubes juxtaposés. Le bourrelet n'est destiné qu'à servir de moyen d'emboitement dans l'évidement d'un tube voisin, l'évidement du tube étant en outre de nature à limiter la section utile du conduit pour la réception de câbles.

Le tube profilé selon l'invention se caractérise par le fait qu'il comporte, une paroi à ondulation hélicoïdale et que la paroi du ou de chaque bourrelet est lisse et peut être facilement sectionnée en sens longitudinal à l'aide d'un outil tranchant réalisant ainsi l'ouverture de la gaine en vue d'une mise en place de câbles ou une intervention sur ceux-ci, la gaine pouvant ensuite être refermée à volonté par engagement longitudinal sur le bourrelet d'un profilé de profil correspondant à celui du bourrelet, et réunissant les parties du bourrelet séparées par le sectionnement.

Le tube selon l'invention peut être utilisé, avant sectionnement du ou des bourrelets de la même manière qu'une gaine convolutée classique, l'ouverture, puis la fermeture à l'aide du profilé prévu à cet effect, pouvant n'être effectuées que lorsqu'une intervention doit être réalisée sur les éléments contenus à l'intérieur du tube.

Lorsque le tube profilé selon l'invention doit être réalisé en une matière plastique présentant des propriétés de mémoire plastique à chaud, notamment en PTFE, on peut avantageusement mettre en oeuvre pour sa fabrication le procédé décrit dans FR-A-2554386. de la société déposante, la seule modification à prévoir étant une conformation appropriée du corps tubulaire du moule utilisable à cet effet.

En variante le ou les bourrelets peuvent être réalisés séparément et rapportés et adhérisés au tube profilé pentant le formage de celui-ci.

Dans le but de mieux faire comprendre l'invention, on va maintenant en décrire à titre d'exemple en aucune manière limitatif un mode de réalisation en se référant au dessin annexé dans lequel :

- la figure 1 est une vue d'un exemple de réalisation de tube profilé selon l'invention,
- la figure 2 illustre le sectionnement du bourrelet du tube de la figure 1 à l'aide d'un outil approprié et,
- la figure 3 illustre la manière dont le tube est refermé après sectionnement.

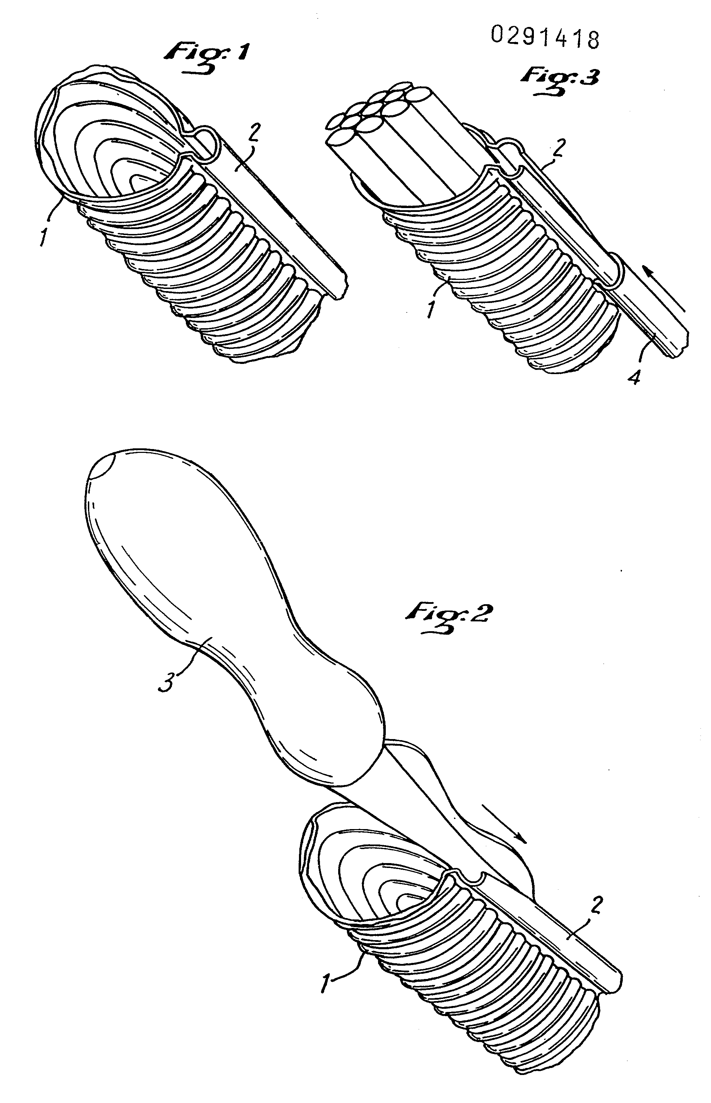

On a illustré sur la figure 1 du tube profilé 1 à ondes hélicoïdales présentant,le long d'une génératrice, un bourrelet 2 à paroi lisse présentant une section en forme d'Omega, ce bourrelet étant réalisé d'un seul tenant avec le tube et la cavité intérieure du bourrelet communiquant avec celle du tube.

Pour réaliser la mise en place d'éléments tels que des câbles d'un faisceau à l'intérieur du tube 1, ou permettre une éventuelle intervention ultérieure sur les éléments contenus à l'intérieur du tube, on peut sectionner celui-ci comme illustré sur la figure 2 à l'aide d'un outil tranchant 3, après quoi l'ensemble peut être refermé comme illustré à la figure 3 en engageant, à partir de l'extrémité fendue du bourrelet, un profilé de fermeture 4 présentant une section sensiblement en forme de C, correspondant à celle du bourrelet 2.

On doit bien comprendre que le nombre et la forme des bourrelets tubulaires ne sont nullement limitatifs de même que la forme de profil du tube.

On réalise ainsi selon l'invention une gaine flexible qui peut être ouverte et refermée à volonté, utilisable avant tout sectionnement le long du ou des bourrelets, ou, après sectionnement, après engagement d'un profilé de fermeture qui peut être facilement retiré, puis remis ultérieurement en cas de besoin.

Bien que l'invention ait été décrite en liaison avec un mode de réalisation particulier, il est bien évident qu'elle n'y est nullement limité, qu'on peut lui apporter de nombreuses variantes et modifications sans pour autant sortir ni de son cadre, ni de sont esprit.

## Revendications

1. Tube profilé en matière plastique, comportant d'un seul tenant au moins un bourrelet tubulaire faisant saillie extérieurement de la paroi du tube profilé, le ou chaque bourrelet étant disposé le long d'une génératrice du tube, caractérisé par le fait qu'il comporte une paroi (1) à ondulation hélicoîdale, et que la paroi du ou de chaque bourrelet (2) est lisse et apte à être sectionnée en sens longitudinal.

2. Tube profilé selon la revendication 1, caractérisé par le fait que la paroi du bourrelet ou de l'un au moins des bourrelets du tube profilé est sectionnée en sens longitudinal, les parties séparées étant réunies par engagement longitudinal sur le bourrelet (2) d'un profilé (4) de profil correspondant à celui du bourrelet.

3. Tube profilé selon l'une quelconque des revendications précédentes, caractérisé par le fait que le ou chaque bourrelet (2) présente une section en forme d'oméga.

4. Tube profilé selon l'une quelconque des revendications précédentes, caractérisé par le fait qu'il est réalisé en matière plastique présentant des propriétés de mémoire plastique à chaud, notamment en résine fluorée.

5. Tube profilé selon l'une quelconque des revendications précédentes, caractérisé par le fait qu'il est réalisé en polytétrafluoréthylène.

Fig.1

0291418

Fig.3

Fig.2

# RAPPORT DE RECHERCHE EUROPEENNE

Numero de la demande

EP  88 40 1172

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 554 985  (SOCIETE D'USINAGE) <br> * Page 4, ligne 31 - page 5, ligne 7; page 8, lignes 26-34; revendication 9; figures 10,11 * | 1 | H 02 G   3/04 |
| A | | 4 | |
| | --- | | |
| Y | GB-A-1 155 470  (RAYCHEM) <br> * En entier * | 1 | |
| A | | 2-4 | |
| | --- | | |
| A | FR-A-1 363 521  (CO. ELECTRO-MECANIQUE) <br> * En entier * | 1,2-4 | |
| | ----- | | |

**DOMAINES TECHNIQUES RECHERCHES (Int. Cl.4)**

H 02 G   3/00

**Le présent rapport a été établi pour toutes les revendications**

| Lieu de la recherche | Date d'achèvement de la recherche | Examinateur |
|---|---|---|
| LA HAYE | 05-08-1988 | RIEUTORT A.S. |